# FASCICULE DE BREVET EUROPEEN

(11) **EP 2 732 401 B1**
(45) Date de publication et mention de la délivrance du brevet: **17.10.2018**
(21) Numéro de dépôt: 12744085.7
(22) Date de dépôt: 11.07.2012
(51) Int. Cl.: G06K 9/20, G08G 1/16, G06K 9/78, G06K 9/00, G01N 21/57

(54) **DISPOSITIF ET PROCEDE D'IMAGERIE POUR PRODUIRE UNE IMAGE DE MARQUAGES ROUTIERS**
BILDGEBUNGSVORRICHTUNG UND VERFAHREN ZUR ERZEUGIMG EINES BILDES VON FAHRBAHNMARKIERUNGEN
IMAGING DEVICE AND METHOD FOR GENERATING AN IMAGE OF ROAD MARKINGS

(30) Priorité: 12.07.2011 FR 1156362
(43) Date de publication de la demande: 21.05.2014
(73) Titulaire: Institut Français des Sciences et Technologies des Transports, de l'Amenagement et des Reseaux, 77420 Champs sur Marne (FR)
(72) Inventeur: GUILLARD, Yannick, F-72210 Fille (FR); CHARBONNIER, Pierre, F-67380 Lingolsheim (FR); FOUCHER, Philippe, F-67100 Strasbourg (FR); SEBSADJI, Yazid, F-49100 Angers (FR)
(74) Mandataire: Duflos, Bertrand Guillaume
(86) Numéro de dépôt international: PCT/FR2012/051647
(87) Numéro de publication internationale: WO 2013/007955

(56) Documents cités:
- EP-A2- 1 486 799
- WO-A1-98/39635
- WO-A1-2011/069191
- GB-A- 2 173 897
- US-A1- 2004 160 595
- US-A1- 2008 040 039
- US-A1- 2010 098 294
- FARDI B ET AL: "Multi modal detection and parameter-based tracking of road borders with a laser scanner", INTELLIGENT VEHICLES SYMPOSIUM, 2003. PROCEEDINGS. IEEE JUNE 9-11, 2003, PISCATAWAY, NJ, USA,IEEE, 9 juin 2003 (2003-06-09), pages 95-99, XP010645856, ISBN: 978-0-7803-7848-3
- VACEK, STEFAN AND SCHIMMEL, CONSTANTIN AND DILLMANN, RÜDIGER: "Road-marking Analysis for Autonomous Vehicle Guidance", PROCEEDINGS OF THE 3RD EUROPEAN CONFERENCE ON MOBILE ROBOTS, 19 septembre 2007 (2007-09-19), pages 1-6, XP002672160, FREIBURG, GERMANY Extrait de l'Internet: URL:http://ecmr07.informatik.uni-freiburg. de/proceedings/ECMR07_0034.pdf [extrait le 2012-03-19]

## Description

L'invention concerne un dispositif d'imagerie pour produire une image de marquages routiers d'une chaussée et un procédé pour produire une telle image.

Les marquages routiers, appelés également 'signalisation horizontale', jouent un rôle central en matière de sécurité routière. Par conséquent, la maintenance de ces marquages et le suivi de leur état sont des opérations importantes.

Pour suivre l'état de marquages routiers, différentes campagnes de mesure peuvent être réalisées. La principale opération de suivi reste simplement l'inspection visuelle.

Toutefois, afin de permettre une traçabilité des informations, de manière connue les campagnes d'inspection des marquages comportent l'acquisition de photos, voire de films, sur lesquels apparaissent les marquages. Ces photos ou ces films permettent d'étudier l'évolution de l'état des marquages et de décider des opérations de maintenance et/ou de rénovation nécessaires.

Cependant, de telles campagnes génèrent une masse de données considérable. De plus, dans le cas de photos, l'examen de ces données nécessite la consultation d'un nombre considérable de photos. La durée nécessaire pour examiner ces données est donc considérable.

Par exemple, la demande de brevet EP1486799 décrit un dispositif d'imagerie pour déterminer la condition des marquages routiers d'une chaussée à l'aide de photos prises dans un véhicule. Le système comporte un projecteur de lumière, des moyens de mesure et de moyens de calcule pour produire des images de la chaussée et calculer la lumière rétroréfléchie.

Pour remédier à ce problème, un premier objectif de l'invention est de proposer un dispositif susceptible de produire des informations relatives aux marquages routiers d'une chaussée, de telle sorte que les informations produites soient suffisantes pour pouvoir évaluer l'état des marquages, mais soient fournies dans un format relativement compact et permettant un accès rapide aux informations importantes, et cela à un coût abordable.

Cet objectif est atteint grâce à un dispositif d'imagerie pour produire une image de marquages routiers d'une chaussée, comportant un projecteur de lumière visible, apte à éclairer la chaussée suivant une direction d'éclairage sous un angle d'incidence voisin de 1,24°, pour permettre la mesure de la luminance de la chaussée ;
des moyens de mesure de l'éclairement ainsi appliqué à la chaussée par le projecteur ;
des moyens d'acquisition de profils de luminance, aptes à acquérir des profils de luminance à des emplacements de mesure successivement éclairés par le projecteur, les profils de luminance étant acquis à partir du rayonnement rétroréfléchi par la chaussée observée sous un angle voisin de 2,29° ; et
des moyens de calcul aptes à déterminer des profils de luminance rétroréfléchie à partir des profils de luminance acquis, les valeurs de luminance rétroréfléchie desdits profils de luminance rétroréfléchie étant chacune égale au rapport de la luminance d'une surface éclairée par le projecteur à l'éclairement auquel la surface est soumise ;
les moyens de calcul étant en outre aptes à produire une image représentant lesdits marquages à partir d'une pluralité de profils de luminance acquis par lesdits moyens d'acquisition.

Le coefficient de luminance rétroréfléchie de marquages routiers caractérise la capacité de ceux-ci à renvoyer la lumière issue des feux d'un véhicule vers le conducteur. Il est noté R_{L} et s'exprime en mcd.m⁻².lx⁻¹. Comme indiqué précédemment, le coefficient de luminance rétroréfléchie s'obtient en divisant la luminance (mesurée par les moyens d'acquisition) par l'éclairement (mesuré par les moyens de mesure de l'éclairement).

Dans ce calcul, l'éclairement peut être l'éclairement total, ou peut être l'éclairement résultant seulement de la lumière projetée par le projecteur.

Par 'profil', on désigne une suite (ordonnée) de valeurs (un N-uplet). Les profils de luminance contiennent donc les valeurs de luminance en une suite de points de mesure, en général alignés, mesurés simultanément ou sensiblement simultanément en un emplacement de mesure.

On comprend par ailleurs que les profils doivent être disposés de manière à couvrir les marquages routiers dont on cherche à produire une image.

De manière connue, pour vérifier que le coefficient de luminance rétroréfléchie de marquages routiers reste dans une plage de valeurs acceptable, on procède à des campagnes de mesure de la luminance rétroréfléchie des marquages.

Ces campagnes sont effectuées au moyen de dispositifs de mesure du coefficient de luminance rétroréfléchie R_{L} de marquages routiers, embarqués à bord de véhicules. De tels dispositif sont par exemple décrits par le brevet français FR2935489. Il s'agit de préférence de dispositifs de mesure du coefficient de luminance rétroréfléchie R_{L} conformes aux exigences de la norme NE EN 1436+A1, Annexe B.

De tels dispositifs comportent des moyens d'acquisitions mobiles, prévus pour être placés à des emplacements de mesure successifs, et aptes à chacun de ces emplacements à acquérir un profil de luminance comprenant N valeurs de luminance (N>1).

Il est apparu que les profils successifs, acquis par ces moyens d'acquisition peuvent être exploités pour constituer une image à partir des valeurs de luminance acquises. En particulier, bien que le nombre de valeurs contenues dans chaque profil soit relativement réduit (Il peut varier typiquement d'une trentaine de valeurs mesurées à 100 ou 200 valeurs) ; et bien que la luminance rétroréfléchie ne soit pas identique à l'information et notamment l'information de couleur que peut recueillir un appareil photographique, et en particulier ne soit pas une information aussi riche que l'information de couleur recueillie par un appareil photographique, l'image formée à partir des profils de luminance rétroréfléchie fournit cependant une information suffisante pour apprécier l'état des marquages routiers et prendre des décisions quant à leur maintenance.

Par suite, le dispositif d'imagerie selon l'invention fournit une image exploitable pour évaluer l'état de marquages routiers, et cela même dans le cas où les profils de luminance acquis comportent un nombre de valeurs restreint, inférieur à 200 ou même à 150. Des profils de luminance comportant 80 valeurs ou moins peuvent même être utilisés.

L'image produite par un dispositif d'imagerie selon l'invention contient en pratique une information extrêmement riche sur l'état des marquages routiers, qui peut remplacer avantageusement les informations bien plus sommaires utilisées en pratique pour décider de la maintenance des marquages routiers (les campagnes photos ou les inspections visuelles citées précédemment étant en effet en général utilisées seulement de manière très partielle). Cette image peut servir aussi comme donnée d'entrée pour un système d'information géographique (GIS) répertoriant les marquages routiers.

Les profils de luminance sont mesurés aux emplacements de mesure successifs le long du trajet parcouru par le véhicule sur lequel le dispositif est monté. Bien évidemment, ces profils ont tous le même nombre d'éléments. Ces profils sont acquis naturellement de telle sorte qu'ils forment sensiblement un recouvrement du ou des marquages étudiés (ce qui signifie que tout point du marquage apparaît en principe dans l'un ou l'autre des profils).

Selon l'invention, les profils de luminance sont exploités par les moyens de calcul pour constituer une image ou un ensemble d'images qui permet d'évaluer de manière simple et directe l'état des marquages. Avantageusement, il n'est donc pas nécessaire de procéder à une campagne d'acquisition spécifique pour recueillir des informations relatives à l'état des marquages, en plus de la campagne de mesure du coefficient de luminance rétroréfléchie des marquages. Le dispositif proposé est donc particulièrement économique à utiliser.

Habituellement, l'image formée à l'aide d'un dispositif selon l'invention comporte un nombre de colonnes qui correspond au nombre de valeurs acquises par les moyens d'acquisition pour chacun des profils de luminance. Inversement, elle peut comporter un nombre considérable de lignes (qui peut être fractionné ou limité à volonté), chaque ligne correspondant à un profil acquis. Grâce à cela, la consultation de toute l'information obtenue peut être faite par simple défilement de l'image ('scrolling') : Ainsi, il n'y a pas de redondance dans l'information obtenue, grâce à quoi la consultation de l'information obtenue est bien plus rapide que l'examen de la séquence d'images correspondante qui aurait concerné les mêmes marquages, suivant le procédé antérieur. L'image obtenue par le dispositif selon l'invention est ainsi beaucoup plus légère (en termes de taille de fichier) qu'un film contenant la même information.

Le dispositif selon l'invention comprend principalement les composants suivants : un projecteur, des moyens de mesure de l'éclairement, des moyens d'acquisition de profils de luminance rétroréfléchie, et des moyens de calcul.

Le terme 'projecteur' désigne de manière large un dispositif d'émission et de projection de lumière. Il peut ainsi comprendre une source lumineuse unique aussi bien qu'une pluralité de sources lumineuses. Il projette une lumière ayant en général une distribution spectrale prédéterminée (notamment conforme à l'illuminant normalisé A défini par la norme ISO10526) et contrôlée, sur la ou les surfaces à mesurer. La lumière projetée est une lumière visible, qui peut ou non être une lumière cohérente.

En général, un dispositif selon l'invention peut être exploité dans un mode dit 'passif', projecteur éteint, pour acquérir des profils de luminance en lumière ambiante. Les moyens d'acquisition fournissent alors des profils de luminance simplement à partir du rayonnement émis par la surface étudiée sous l'effet de la lumière ambiante ou lumière naturelle (de jour ou éventuellement de nuit), sans que cette surface ne soit éclairée par une lumière supplémentaire. Si la lumière ambiante est insuffisante, un éclairage peut être prévu pour permettre l'acquisition des profils de luminance. Cet éclairage additionnel peut provenir du dispositif d'imagerie, des phares du véhicule sur lequel le dispositif est monté, ou de tout autre projecteur embarqué sur ce véhicule. Le dispositif fournit alors des images des marquages correspondant aux conditions d'éclairage lors de la mesure. Le dispositif selon l'invention peut ainsi, et notamment dans ce mode passif, être utilisé pour produire des images de tous types de marquages, y compris donc des marquages ayant un faible coefficient de luminance rétroréfléchie, que ce soit du fait de leur usure, ou encore parce qu'il ne s'agit pas de marquages conçus pour être visibles de nuit.

Cela étant, pour la mesure du coefficient de luminance rétroréfléchie, notamment de jour, le projecteur doit être utilisé.

Par ailleurs, le dispositif selon l'invention est plus particulièrement intéressant pour les marquages destinés à être visibles de nuit, présentant un coefficient de luminance rétroréfléchie élevé, car il permet simultanément pour ces marquages d'acquérir leurs coefficients de luminance rétroréfléchie, et d'en constituer une image.

En général, les moyens d'acquisition sont prévus pour réaliser des acquisitions point par point, ou ligne par ligne, mais pas de manière matricielle. Il s'agit ainsi bien de moyens d'acquisition de profils, et non de moyens d'acquisition matriciels comme des matrices CCD. Par suite, la quantité d'informations acquise reste modérée ce qui limite les besoins de calcul par les moyens de calcul.

En principe, les moyens d'acquisition sont agencés de telle sorte que les plans verticaux contenant les directions d'éclairage et d'observation soient sensiblement confondus.

Dans un mode de réalisation, les moyens d'acquisition comportent au moins un détecteur de lumière. Ce détecteur peut être de tous types : un photodétecteur simple, tel qu'un photomultiplicateur (phototube ou tube photomultiplicateur), un photoconducteur (ou détecteur photoconducteur), une photodiode ; ou un photodétecteur multiple (pour l'acquisition simultanée de plusieurs valeurs du profil de luminance), tel qu'un détecteur de position (Position sensitive device, PSD) ou un photodétecteur à transfert de charges (CCD).

Dans un mode de réalisation, les moyens d'acquisition peuvent notamment être aptes à acquérir des profils de luminance représentant directement les signaux fournis par le ou les détecteur(s) de lumière.

Par 'représentant directement', on signifie ici que les valeurs de luminance sont obtenues à partir des signaux de sorties délivrés par le ou les détecteurs de lumière, avec seulement un traitement de mise en forme de ces signaux, ce qui peut inclure notamment et par exemple, l'application d'un facteur d'échelle, une opération de moyennage, ou encore le lissage d'une suite de valeurs successives dans le temps et/ou provenant de détecteurs adjacents. Ce traitement direct exclut cependant le calcul d'une différence entre les signaux délivrés par le ou les détecteurs dans un premier état d'éclairage de la surface et dans un deuxième état d'éclairage de la surface différent du premier état.

En général, les moyens d'acquisition comportent un ensemble (ou une barrette) de détecteurs pour produire les profils de luminance rétroréfléchie, chaque valeur du profil étant fournie par un détecteur. Les détecteurs sont de préférence en nombre suffisamment élevé ; cependant, il suffit d'un nombre relativement restreint de détecteurs pour obtenir déjà une information très significative quant à l'état des marquages routiers.

Dans le mode de réalisation préféré, les moyens de calcul produisent l'image (des marquages) en affectant les profils de luminance aux lignes successives d'une image. (Bien évidemment, il est aussi possible de transposer l'image afin de produire une image dans laquelle les profils sont affectés successivement aux différentes colonnes.)

A partir de l'information de luminance et/ou de luminance rétroréfléchie R_{L}, l'image produite est en général en niveaux de gris ; de fausses couleurs peuvent être affectées pour faciliter l'interprétation (c'est-à-dire, l'affectation aux pixels de différentes couleurs du spectre visible en fonction des valeurs de luminance, suivant une fonction arbitraire).

Les moyens de calcul peuvent produire leurs images de différentes manières.

De manière générale, les moyens de calcul peuvent constituer l'image représentant les marquages à partir d'une pluralité de profils de luminance et/ou de profils de luminance rétroréfléchie. L'image produite par le dispositif peut ainsi être constituée par les profils de luminance eux-mêmes. Cependant, de préférence l'image produite par le dispositif est constituée par les profils de luminance rétroréfléchie, qui ces profils présentent des valeurs plus représentatives que les valeurs de luminance (la division par l'éclairement a pour effet de normaliser ou homogénéiser les valeurs des différents profils).

Dans un mode de réalisation, les moyens de calcul sont aptes à produire une image représentant les marquages en combinant des profils de luminance et des profils de luminance rétroréfléchie. Cette opération de 'combinaison' désigne toute opération qui produit l'image représentant les marquages en utilisant comme données d'entrée à la fois des profils de luminance et des profils de luminance rétroréfléchie. Par exemple, les moyens de calcul peuvent comprendre un module de sélection, apte en fonction d'un critère prédéterminé à sélectionner les profils parmi les profils de luminance rétroréfléchie et les profils de luminance, qui seront utilisés pour constituer l'image représentant les marquages. Le critère utilisé peut être fondé par exemple sur une évaluation des variations de luminance le long du profil.

En général, les profils utilisés pour produire l'image de réflectance sont des profils acquis successivement par les moyens d'acquisition. Cependant, les moyens de calcul peuvent par exemple n'exploiter qu'un profil sur deux, trois, etc.

L'image produite par les moyens de calcul peut être une image en teintes réelles (dans le cas d'une acquisition en couleur) ou monochrome.

Dans les images produites, en général chaque profil de luminance ou chaque profil de luminance rétroréfléchie est obtenu à partir d'une seule acquisition faite par les détecteurs de lumière des moyens d'acquisition.

Cependant, lorsque la lumière ambiante n'est pas nulle ou négligeable, et donc notamment de jour, le calcul des coefficients de luminance rétroréfléchie peut nécessiter une double acquisition des profils de luminance, à savoir une acquisition projecteur allumé, et une acquisition projecteur éteint. Les moyens d'acquisition calculent alors les profils de luminance rétroréfléchie sur la base de différences entre les profils de luminance acquis lorsque le projecteur est éteint et les profils de luminance acquis lorsque le projecteur est allumé. Par exemple, les moyens d'acquisition peuvent calculer les profils de luminance rétroréfléchie en soustrayant les profils de luminance acquis projecteur éteint aux profils de luminance acquis projecteur allumé.

Un second objectif de l'invention est de proposer un procédé de production d'informations sur les marquages routiers d'une chaussée qui permette de fournir des informations relatives aux marquages routiers permettant d'évaluer l'état de ceux-ci, ces informations étant produites sous un format compact et permettant une consultation rapide.

Cet objectif est atteint par un procédé de production d'une image de marquages routiers d'une chaussée, utilisant un dispositif de mesure du coefficient de luminance rétroréfléchie de marquages routiers ; le procédé comportant une pluralité d'acquisitions de profils de luminance, réalisées à une pluralité d'emplacements de mesure successifs, chaque acquisition consistant à projeter une lumière visible sur des surfaces de la chaussée sous un angle d'incidence voisin de 1,24°, et à acquérir un profil de luminance représentatif des surfaces éclairées ; le procédé comportant en outre une étape de constitution de ladite image à partir des profils de luminance acquis aux emplacements de mesure successifs ;
les profils de luminance étant acquis à partir du rayonnement rétroréfléchi par la chaussée observée sous un angle voisin de 2,29° ;
le dispositif de mesure étant apte à déterminer des profil de luminance rétroréfléchie à partir des profils de luminance acquis ;
le dispositif de mesure comportant des moyens de mesure de l'éclairement appliqué auxdites surfaces éclairées ; et
les valeurs de luminance rétroréfléchie des profils de luminance rétroréfléchie étant chacune égale au rapport de la luminance d'une surface éclairée par le projecteur à l'éclairement auquel ladite surface est soumise par le projecteur.

Naturellement, plus le recouvrement des marquages par les profils de luminance est complet, plus l'image obtenue apporte une information exploitable et complète quant à l'état des marquages étudiés.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique représentant un véhicule procédant à l'acquisition successives de profils de luminance rétroréfléchie de marquages routiers d'une chaussée, au moyen d'un dispositif selon l'invention ;
- les figures 2, 2A et 2B représentant respectivement une image et un détail de cette image (sous deux résolutions différentes) représentant un marquage routier d'une chaussée, l'image étant produite par un dispositif selon l'invention ; et
- la figure 3 représente une image produite par un dispositif selon l'invention, respectivement brute et après traitement.

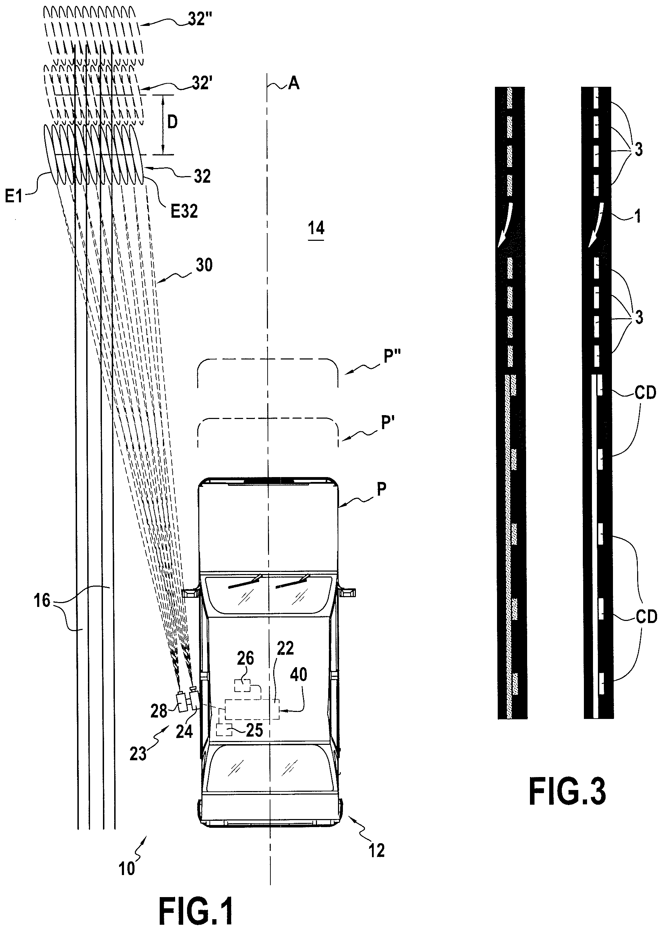

Un dispositif d'imagerie 10 dans un premier mode de réalisation de l'invention va maintenant être décrit (figure 1).

Ce dispositif d'imagerie 10 comprend un projecteur de lumière 23, des moyens 25 de mesure de l'éclairement appliqué à la chaussée, des moyens 22,24 d'acquisition de profils de luminance (P1...P20), et des moyens de calcul 40.

Le dispositif 10 est identique à celui décrit par la demande de brevet français FR2935489, et ne sera donc pas décrit en détail ici. De manière schématique, son fonctionnement est le suivant :
- un ensemble de faisceaux lumineux sont projetés sur une surface, à un emplacement auquel le marquage routier doit être mesuré ;
- des moyens d'acquisition réalisent l'acquisition d'une partie du rayonnement réfléchi ou plutôt rétro-réfléchi, qui est réémis vers l'arrière par rapport à la direction d'émission des faisceaux lumineux ; et
- des moyens de calcul traitent les signaux délivrés par les moyens d'acquisition, et déterminent le coefficient de luminance R_{L} du marquage routier.

Par contraste avec le dispositif de l'art antérieur, les moyens de calcul 40 produisent en plus des images des marquages routiers.

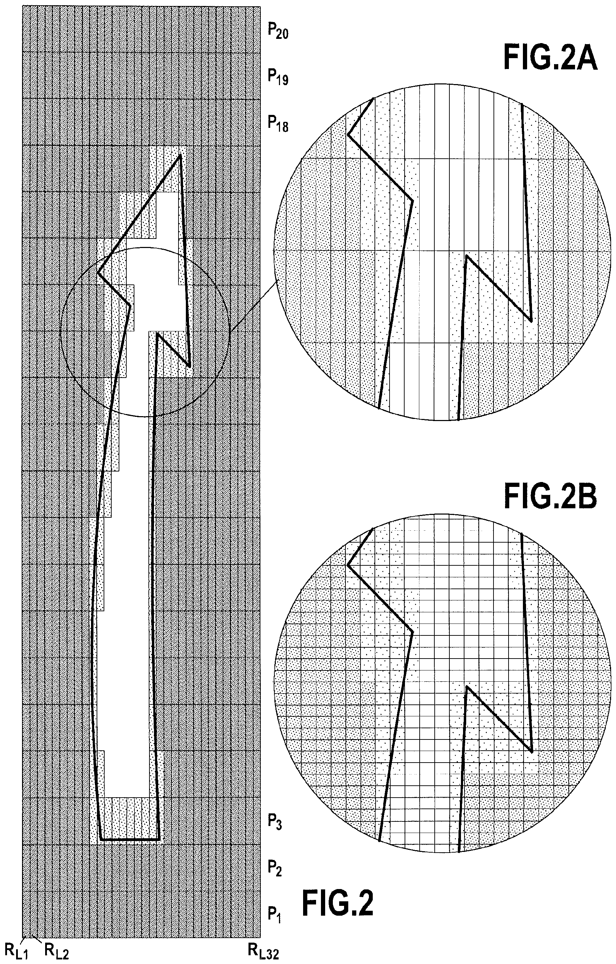

Le dispositif 10 est monté à bord d'un véhicule automobile 12 représenté sur la figure 1, circulant sur une chaussée 14 sur laquelle sont réalisés des marquages routiers 16. Ces marquages sont généralement en forme de bandes continues ou discontinues, simples ou parfois doubles ; ils peuvent être placés d'un côté ou de l'autre de la voie de circulation. Ils peuvent inclure également différents signes, comme par exemple des flèches (voir figures 2 ou 3). Sur la figure 1, le marquage routier 16 mesuré consiste en une bande double disposée sur le côté gauche de la voie de circulation du véhicule 12.

Les composants matériels principaux du dispositif 10 sont une unité centrale 22, une tête de mesure 24, des moyens 25 de mesure de l'éclairement produit par le projecteur, un système de positionnement géographique (GPS) 26, et un système de projection 28.

Le projecteur 23 comporte un ensemble de diodes électroluminescentes placées dans l'unité centrale 22, et le système de projection 28. La lumière blanche produite par les diodes est transmise par fibre optique au système de projection 28. Le système 28 projette alors cette lumière sur la chaussée, suivant une direction d'éclairage formant un angle d'incidence voisin de 1,24° avec la chaussée (Voisin signifiant dans ce document : +/- 0,05°).

Le système de projection 28 est placé au-dessous de la tête de mesure 24, à l'extérieur du véhicule.

Le dispositif 10 est alimenté par la batterie non représentée du véhicule 12.

Les moyens d'acquisition des profils de luminance sont constitués par la tête de mesure 24 associée à l'unité centrale 22. L'acquisition de profils de luminance se fait de la manière suivante :
A un même moment, les diodes électroluminescentes du projecteur 23 sont alimentées de manière à produire de la lumière. Cette lumière est transmise par les fibres optiques jusqu'au système de projection 28 par lequel elle est projetée sur le sol dans une zone 32 dite 'zone de mesure'. Cette zone est une zone prédéterminée, située à l'avant gauche du véhicule à environ 6 mètres en avant de la tête de mesure, et dont la position relative par rapport à la tête de mesure est définie et normalisée de manière très précise afin d'obtenir une valeur normalisée pour le coefficient de luminance rétroréfléchie R_{L}. Le véhicule 12 et par suite le dispositif 10 sont positionnés naturellement de telle sorte que la zone de mesure 32 soit située sur la partie de la chaussée 14 que l'on veut étudier.

Le coefficient R_{L} est mesuré simultanément en trente-deux points. Pour cela, dans le mode de réalisation présenté, la lumière est projetée simultanément sous forme de trente-deux faisceaux lumineux 30, de section circulaire, dits 'faisceaux incidents' (Pour des raisons de lisibilité, seuls douze faisceaux sont représentés sur la figure 1).

La zone de mesure 32 est constituée par la réunion des taches de lumière E₁ à E₃₂ de forme elliptique formées sur le sol par les faisceaux lumineux 30.

Sous l'effet de cet éclairage, la surface éclairée frappée par les faisceaux lumineux incidents émet un rayonnement appelé rayonnement réfléchi.

Ce rayonnement est capté par les moyens d'acquisition (plus précisément, par la tête de mesure 24), qui comportent dans ce but un ensemble de détecteurs alignés. En l'occurrence, les moyens d'acquisition comportent trente-deux photodétecteurs, intégrés à la tête de mesure 24, qui captent le rayonnement réfléchi respectivement par chacune des taches de lumière E₁ à E₃₂. La tête de mesure 24 est agencée de telle sorte que les profils de luminance sont acquis suivant une direction d'observation formant un angle voisin de 2,29° par rapport à la surface de la chaussée.

On notera par ailleurs que sur la figure 1, la tête de mesure 24 et le système de projection 28 sont représentés décalés. En réalité, ils sont placés l'un au-dessus de l'autre, de telle sorte que les plans verticaux contenant les directions d'éclairage et d'observation sont sensiblement confondus.

Les signaux produits par les photodétecteurs sont transmis à l'unité centrale 22, qui est un micro-ordinateur de type PC. L'unité centrale 22 constitue à partir de ces signaux un profil de luminance comportant trente-deux valeurs.

En parallèle, une partie du rayonnement émis par les diodes est dirigée vers les moyens 25 de mesure de l'éclairement. Ces moyens 25 analysent ce rayonnement et déterminent la valeur de l'éclairement auquel sont soumises les ellipses éclairées E₁ à E₃₂ de la zone de mesure.

A partir du profil de luminance, et de la ou des valeurs d'éclairement ainsi obtenues, les moyens de calculs 40 calculent un profil de luminance rétroréfléchie, comportant trente-deux valeurs égales respectivement aux valeurs de luminance rétroréfléchie de chacune des ellipses E₁ à E₃₂. Pour chaque ellipse, le coefficient de luminance rétroréfléchie est obtenu en divisant la luminance mesurée pour l'ellipse par l'éclairement de celle-ci.

Dans ce mode de réalisation, les moyens d'acquisition comportent un ensemble de trente-deux photodétecteurs alignés. Naturellement, même si les profils dans le dispositif 10 sont acquis simultanément par une barrette de photodétecteurs, l'invention n'est pas limitée à ce mode d'acquisition. Ainsi par exemple, les profils peuvent être acquis par le balayage du marquage, notamment en zig-zag, l'important étant d'obtenir un ensemble de profils constituant un recouvrement au moins partiel, et de préférence complet, du marquage étudié. Dans ce cas, la zone de mesure peut n'être éclairée que par un seul faisceau lumineux, et les moyens d'acquisition peuvent ne comporter qu'un seul photodétecteur.

Il n'est pas nécessaire que les profils soient mesurés dans une direction perpendiculaire à la direction de déplacement du véhicule ; l'angle entre la direction du déplacement et la direction de mesure des profils peut être différent de 90°.

D'autre part, l'acquisition de luminance peut se faire non seulement en lumière blanche, mais dans toute plage de longueur d'ondes comportant une partie visible. De plus, la lumière utilisée peut être non cohérente, comme de la lumière blanche, ou encore cohérente : les moyens d'acquisition de profils de luminance peuvent comporter une source laser comme moyen d'éclairage de la zone de mesure.

Par ailleurs et comme indiqué précédemment, le dispositif comprend des moyens 26 d'acquisition d'informations de position des profils de luminance. Les moyens de calcul 40 sont prévus pour exploiter ces informations de position pour produire l'image ou les images représentant les marquages. On comprend que par « position des profils de luminance », on désigne la position de l'emplacement auquel a été mesuré le profil de luminance considéré.

Dans le mode de réalisation présenté, le dispositif 10 comprend ainsi un système de positionnement géographique (GPS) 26 comme moyen d'acquisition d'informations de position.

Ainsi, pendant les opérations d'acquisition des profils de luminance aux emplacements de mesure successifs, le système 26 acquiert périodiquement la position du véhicule et la transmet aux moyens de calculs 40. A partir de ces informations, les moyens de calculs 40 calculent une estimation de la position de chaque emplacement de mesure (par interpolation ou toute autre méthode appropriée). L'information de position des profils de luminance est dans ce cas une information de position absolue.

Dans un autre mode de réalisation, le GPS est remplacé par un odomètre en tant que moyens d'acquisition d'informations de position des profils de luminance. Une position approchée de la position de chaque emplacement de mesure peut alors être évaluée sous la forme d'une abscisse curviligne le long de l'itinéraire suivi. Dans ce cas, la position des profils de luminance est (mais pas nécessairement) une position relative, définie par rapport au point de départ, et non une position absolue.

Par suite, l'image ou les images produites par les moyens de calcul sont géoréférencées.

Cependant, l'information de position peut aussi être utilisée pour réaliser un post-traitement de l'image produite par le dispositif d'imagerie 10. Un tel post-traitement sera détaillé par la suite.

Le procédé de constitution des images représentant les marquages routiers va maintenant être détaillé.

Une première phase de production des images consiste à réaliser un certain nombre d'acquisition de profils de luminance à des emplacements de mesure successifs. Ces profils sont choisis de manière à former un recouvrement au moins partiel des marquages étudiés.

Pour acquérir ces profils de luminance, le pilote du véhicule 12 conduit celui-ci de telle sorte que la zone de mesure balaie les marquages à mesurer lors du déplacement du véhicule. Pendant ce déplacement, le dispositif 10 est activé et procède à l'acquisition successive de profils de luminance. Ce processus est illustré par la figure 1.

Le véhicule 12 est représenté en trait continu dans une première position P, qui correspond à un premier emplacement de mesure 32 auquel un premier profil de luminance est mesuré.

Comme le véhicule se déplace à une deuxième position P', une deuxième acquisition est déclenchée à un deuxième emplacement de mesure 32' pour fournir un deuxième profil.

Le véhicule se déplace alors à une troisième position P" pour permettre de mesurer un profil à un troisième emplacement 32", et ainsi de suite.

Les emplacements successifs de mesure sont distants suivant la direction de déplacement du véhicule d'une distance D. Celle-ci dépend de la fréquence des acquisitions par le dispositif 10 et de la vitesse du véhicule. La distance D peut être fixée de telle sorte qu'il y ait ou non recouvrement entre les zones de mesure du dispositif 10 aux emplacements de mesure successifs ; de préférence, conformément à l'illustration, il est préférable de faire en sorte que les emplacements de mesure réalisent sensiblement un recouvrement de la surface de chaussée étudiée, mais sans néanmoins se superposer.

Dans une deuxième phase du procédé, on constitue l'image à partir des profils de luminance mesurés. Cette étape de constitution des images de marquages routiers par les moyens de calcul 40 est illustrée par la figure 2.

Comme cela a été indiqué précédemment, les profils acquis par le dispositif 10 comportent chacun trente-deux valeurs de luminance. Chaque profil est donc un N-uplet ou vecteur de 32 valeurs R_{L1}, R_{L2},... R_{L32}.

En divisant chaque valeur des profils de luminance par l'éclairement correspondant, on obtient les profils de luminance rétroréfléchie.

Les profils de luminance rétroréfléchie successifs sont affectés successivement aux lignes d'une image. Dans l'exemple de la figure 2, vingt profils P1, P2,... P20, acquis successivement lors du déplacement du véhicule le long d'une flèche de rabattement ont ainsi été obtenus ; les profils de luminance rétroréfléchie correspondant sont affectés successivement aux vingt lignes d'une image.

L'image ainsi produite comporte sur les côtés des pixels sombres correspondant à la couleur gris sombre de la chaussée ; des pixels blancs correspondant aux zones de mesure élémentaires Eᵢ qui ont été mesurées entièrement sur le marquage ; et des pixels gris clair, qui correspondent aux zones élémentaires de mesure qui ont été mesurées en partie sur le marquage et en partie sur la chaussée.

Du fait que chacune des zones de mesure élémentaires Eᵢ a une surface au sol de l'ordre de 5 x 40 cm, les pixels de l'image obtenue ne sont pas carrés mais rectangulaires avec un ratio de l'ordre de 8 entre la hauteur et la largeur. Naturellement, si l'image ne peut être formée qu'avec des pixels carrés, afin de conserver les proportions du marquage, chaque valeur de luminance acquise peut être affectée par exemple à 8 lignes successives, comme cela est représenté en figure 2B.

On constate que le procédé selon l'invention permet d'obtenir très facilement une image du marquage, cette image étant cependant d'assez basse résolution dans le mode de réalisation présenté. Rien n'empêche cependant d'utiliser un dispositif de mesure ayant une résolution supérieure, c'est-à-dire un nombre accru de points de mesure de la luminance (c'est-à-dire de photodétecteurs) par unité de longueur.

Dans l'exemple présenté, l'image a été constituée à partir d'une suite de profils de luminance rétroréfléchie.

Dans un autre mode de réalisation, les moyens de calcul 40 sont aptes à établir des profils de luminance 'bruts'. Ces profils bruts contiennent les valeurs directement fournies par les photodétecteurs de la tête de mesure 24. Aussi, l'image des marquages routiers peut être produite à partir des profils de luminance eux-mêmes, plutôt qu'à partir des profils de luminance rétroréfléchie. Cette possibilité permet en particulier d'effectuer des campagnes de mesure de jour pour constituer des images des marquages routiers.

Différents post-traitements peuvent être appliqués à l'image produite par le dispositif d'imagerie 10 afin de rendre cette image plus facilement exploitable.

Naturellement ces post-traitements peuvent être mis en oeuvre ou au contraire désactivés, selon que l'on veut que l'image représente les marquages tels qu'ils sont ou plutôt tels qu'ils devraient être.

Une première famille de post-traitements consiste en des opérations d'identification des marquages présents dans l'image. Cette opération est une reconnaissance de formes qui peut faire appel à tous les algorithmes connus dans ce domaine. Dans ce but, les moyens de calcul sont aptes à extraire dans l'image le type, la position et/ou le contour des marquages routiers.

Les marquages ainsi détectés peuvent alors être identifiés dans l'image, par exemple par des codes ('1', '3', 'CD' dans l'image de droite de la figure 3, qui est l'image obtenue à l'issue des différents post-traitements).

Une deuxième famille de post-traitements consiste en des opérations de rectification : Un marquage identifié peut être remplacé dans l'image soit par une vignette (image de petites dimensions) représentant le marquage type ; de manière alternative, la rectification peut consister seulement en un changement de couleur des pixels, les pixels du marquage étant par exemple remplacés par des pixels blancs, les pixels de la route étant par exemple remplacés par des pixels noirs. Les pixels placés en bordure du marquage restent alors de préférence de couleur intermédiaire.

Un exemple d'une telle modification apparaît sur la figure 3. Dans cette figure en effet, la teinte des marquages sous forme de bande continue ou discontinue (notée '3' ou 'CD') a été corrigée : Ainsi alors que ces marquages apparaissaient dans l'image brute (image du côté gauche sur la figure 3) dans un niveau de gris intermédiaire, ces marquages ont été rectifiés pour apparaître en blanc sur l'image finale, qui est l'image de droite sur la figure 3.

Une troisième famille de post-traitements consiste en des opérations de décalage visant à modifier la position d'un (ou de plusieurs) marquages dans l'image. Il s'agit donc de déplacer dans l'image un groupe de pixels représentant un marquage routier préalablement identifié.

Ce décalage peut être notamment un décalage dans la direction de l'image qui correspond à une direction perpendiculaire au déplacement du véhicule (direction horizontale dans le cas de la figure 2, la direction correspondant à la direction de déplacement étant la direction verticale dans l'image de la figure 2).

Pour pouvoir réaliser un tel décalage d'un marquage routier dans l'image, dans le mode de réalisation présenté, les moyens de calcul sont aptes à modifier dans l'image la position de marquages routiers dans le sens correspondant à une direction perpendiculaire à la direction de déplacement des moyens d'acquisitions de profils de luminance, notamment en fonction desdites informations de position, ou encore de manière à centrer les marquages dans l'image. Une telle modification peut être faite :
- en fonction des informations de position, afin que dans l'image produite, les marquages routiers apparaissent à une position la plus exacte possible ; ou encore
- de manière à centrer les marquages dans l'image, c'est-à-dire à égale distance du côté gauche et du côté droit de l'image.

Un exemple d'une telle modification apparaît sur la figure 3. Dans cette figure en effet, le marquage '1' qui est une flèche de rabattement, a été décalé de manière à être centré entre les côtés gauche et droit de l'image. Ainsi alors que cette flèche apparaissait décalée sur la gauche dans l'image brute (image du côté gauche sur la figure 3), cette flèche apparaît comme centrée sur l'image finale, qui est l'image de droite sur la figure 3.

Pour réaliser ce décalage, les moyens de calcul ont décalé horizontalement les pixels correspondant à la flèche de rabattement, sans qu'il n'y ait en revanche de décalage vertical de ces pixels.

Le décalage peut aussi être un décalage dans la direction de l'image qui correspond à la direction du déplacement du véhicule (direction verticale dans le cas de la figure 2).

Pour pouvoir réaliser un tel décalage, les moyens de calcul sont aptes à modifier dans ladite image la position de marquages routiers dans la direction correspondant à la direction de déplacement des moyens d'acquisitions de profils de luminance, notamment en fonction desdites informations de position. Une telle modification est alors faite principalement en fonction des informations de position disponibles (position absolue géoréférencée, abscisse curviligne sur le trajet, etc.), afin d'augmenter la précision de l'image finale obtenue.

Par ailleurs, d'autres informations et notamment des informations de position géographique peuvent être ajoutées en surimpression dans l'image finalement produite par le dispositif d'imagerie.

Dans le mode de réalisation représenté, les moyens de calcul 40 intégrés à l'unité centrale 22 sont embarqués à bord du véhicule 12.

Tout en restant dans le cadre de l'invention, les moyens de calcul peuvent être des moyens sous forme par exemple d'un ordinateur dans un bureau. Toutes les opérations de constitution de l'image ou des images représentant les marquages routiers, ainsi que les post-traitements appliqués à ces images, peuvent alors être réalisées sur cet ordinateur, que ce soit en temps réel ou en différé (en batch).

## Revendications

1. Dispositif d'imagerie (10) pour produire une image de marquages routiers (1,3,CD) d'une chaussée (14) à partir d'une pluralité de profils de luminance rétro-réfléchie correspondants à des emplacements de mesure successif, le dispositif comportant un projecteur de lumière visible (23), apte à éclairer la chaussée suivant une direction d'éclairage, sous un angle d'incidence voisin de 1,24°, pour permettre la mesure de la luminance de la chaussée ;
des moyens de mesure de l'éclairement ainsi appliqué à la chaussée par le projecteur ;
des moyens d'acquisition (22,24) de profils de luminance (P1...P20), aptes à acquérir des profils de luminance à des emplacements de mesure successivement éclairés par le projecteur, les profils de luminance étant acquis à partir du rayonnement rétro-réfléchie par la chaussée observée sous un angle voisin de 2,29° ; et
des moyens de calcul (40) aptes à déterminer des profils de luminance rétro-réfléchie à partir des profils de luminance acquis, les valeurs de luminance rétro-réfléchie desdits profils de luminance rétro-réfléchie étant chacune égale au rapport de la luminance d'une surface éclairée par le projecteur à l'éclairement auquel ladite surface est soumise ;
les moyens de calcul (40) étant en outre aptes à produire une image représentant lesdits marquages à partir d'une pluralité de profils de luminance acquis par lesdits moyens d'acquisition.

2. Dispositif selon la revendication 1, dans lequel lesdits profils de luminance acquis comportent un nombre de valeurs restreint qui est inférieur à 200, et de préférence inférieur à 150.

3. Dispositif selon la revendication 1 ou 2, dans lequel les moyens d'acquisition sont aptes à réaliser des acquisitions point par point ou ligne par ligne mais pas de manière matricielle.

4. Dispositif selon l'une quelconque des revendications 1 à 3, dans lequel les moyens d'acquisition sont aptes à calculer un profil de luminance rétro-réfléchie sur la base de différences entre un profil de luminance acquis lorsque le projecteur est éteint et un profil de luminance acquis lorsque le projecteur est allumé.

5. Dispositif selon l'une quelconque des revendications 1 à 4, dans lequel les moyens de calcul produisent ladite image en affectant les profils de ladite pluralité de profils aux lignes successives d'une image.

6. Dispositif selon l'une quelconque des revendications 1 à 5, comprenant en outre des moyens (26) d'acquisition d'informations de position desdits profils de luminance, et les moyens de calcul (40) sont aptes à exploiter lesdites informations de position pour produire ladite au moins une image.

7. Dispositif selon la revendication 6, dans lequel les moyens de calcul sont aptes à modifier dans ladite image la position de marquages routiers dans la direction correspondant à la direction de déplacement des moyens d'acquisitions de profils de luminance, notamment en fonction desdites informations de position.

8. Dispositif selon la revendication 6 ou 7, dans lequel les moyens de calcul sont aptes à modifier dans ladite image la position de marquages routiers dans le sens correspondant à une direction perpendiculaire à la direction de déplacement des moyens d'acquisitions de profils de luminance, notamment en fonction desdites informations de position, ou encore de manière à centrer les marquages dans l'image.

9. Dispositif selon l'une quelconque des revendications 1 à 8, dans lequel les moyens de calcul sont aptes à extraire dans ladite image le type, la position et/ou le contour de marquages routiers.

10. Dispositif selon l'une quelconque des revendications 1 à 9, dans lequel les moyens d'acquisition de profils de luminance comportent un ensemble de détecteurs alignés.

11. Dispositif selon l'une quelconque des revendications 1 à 10, dans lequel les moyens d'acquisition (22,24) de profils comportent au moins un détecteur de lumière, et sont aptes à acquérir des profils de luminance représentant directement les signaux fournis par ledit au moins un détecteur de lumière.

12. Dispositif selon l'une quelconque des revendications 1 à 11, dans lequel les moyens de calcul constituent l'image représentant les marquages à partir d'une pluralité de profils de luminance et/ou de profils de luminance rétroréfléchie.

13. Procédé de production d'une image de marquages routiers d'une chaussée à partir d'une pluralité de profils de luminance rétro-réfléchie correspondants à des emplacements de mesure successifs, en utilisant un dispositif de mesure du coefficient de luminance rétroréfléchie de marquages routiers,
le procédé comportant une pluralité d'acquisitions de profils de luminance, réalisées à une pluralité d'emplacements de mesure successifs, chaque acquisition consistant à projeter une lumière visible sur des surfaces de la chaussée sous un angle d'incidence voisin de 1,24°, et à acquérir un profil de luminance représentatif des surfaces éclairées ;
le procédé comportant en outre une étape de constitution de ladite image à partir des profils de luminance acquis aux emplacements de mesure successifs ;
les profils de luminance étant acquis à partir du rayonnement rétro-réflechie par la chaussée observée sous un angle voisin de 2,29° ;
le dispositif de mesure étant apte à déterminer des profils de luminance rétro-réfléchie à partir des profils de luminance acquis ;
le dispositif de mesure comportant des moyens de mesure de l'éclairement appliqué auxdites surfaces éclairées ; et
les valeurs de luminance rétro-réfléchie des profils de luminance rétroréfléchie étant chacune égale au rapport de la luminance d'une surface éclairée par le projecteur à l'éclairement auquel ladite surface est soumise par le projecteur.

## Patentansprüche

1. Bildgebungsvorrichtung (10) zur Erstellung eines Bilds von Fahrbahnmarkierungen (1, 3, CD) einer Fahrbahn (14) aus einer Vielzahl von Profilen einer rückflektierten Luminanz, die aufeinanderfolgenden Messorten entsprechen, wobei die Vorrichtung umfasst:
einen Projektor von sichtbarem Licht (23), der geeignet ist, die Fahrbahn in einer Beleuchtungsrichtung unter einem Einfallwinkel nahe 1,24° zu beleuchten, um die Messung der Luminanz der Fahrbahn zu gestatten,
Mittel zur Messung der Beleuchtung, die so von dem Projektor auf die Fahrbahn ausgeübt wird,
Mittel (22, 24) zur Erfassung der Luminanzprofile (P1 ... P20), welche geeignet sind, Luminanzprofile an Messorten zu erfassen, die aufeinanderfolgend von dem Projektor beleuchtet werden, wobei die Luminanzprofile aus der von der Fahrbahn rückreflektierten Strahlung, beobachtet unter einem Winkel nahe 2,29°, erfasst werden, und
Rechenmittel (40), die geeignet sind, die Profile der rückreflektierten Luminanz aus den erfassten Luminanzprofilen zu bestimmen, wobei die Werte der rückreflektierten Luminanz der Profile der rückreflektierten Luminanz jeweils gleich dem Verhältnis der Luminanz einer von dem Projektor beleuchteten Fläche zu der Beleuchtung, der die Fläche ausgesetzt wird, sind,
wobei die Rechenmittel (40) außerdem geeignet sind, ein Bild, das die Markierungen darstellt, aus einer Vielzahl von Luminanzprofilen zu erstellen, die von den Erfassungsmitteln erfasst werden.

2. Vorrichtung nach Anspruch 1, wobei die erfassten Luminanzprofile eine begrenzte Anzahl von Werten umfassen, die kleiner ist als 200 und vorzugsweise kleiner als 150.

3. Vorrichtung nach Anspruch 1 oder 2, wobei die Erfassungsmittel geeignet sind, Erfassungen Punkt-für-Punkt oder Linie-für-Linie, jedoch nicht matrixförmig vorzunehmen.

4. Vorrichtung nach einem der Ansprüche 1 bis 3, wobei die Erfassungsmittel geeignet sind, ein Profil der rückreflektierten Luminanz auf der Basis von Unterschieden zwischen einem Luminanzprofil, das erfasst wird, wenn der Projektor ausgeschaltet ist, und einem Luminanzprofil, das erfasst wird, wenn der Projektor beleuchtet ist, zu berechnen.

5. Vorrichtung nach einem der Ansprüche 1 bis 4, wobei die Rechenmittel das Bild erstellen, indem die Profile der Vielzahl von Profilen aufeinanderfolgenden Linien eines Bilds zugeordnet werden.

6. Vorrichtung nach einem der Ansprüche 1 bis 5, außerdem umfassend Mittel (26) zur Erfassung von Positionsinformationen der Luminanzprofile, und wobei die Rechenmittel (40) geeignet sind, die Positionsinformationen zu nützen, um das mindestens eine Bild zu erstellen.

7. Vorrichtung nach Anspruch 6, wobei die Rechenmittel geeignet sind, in dem Bild die Position von Fahrbahnmarkierungen in der Richtung zu modifizieren, die der Richtung der Verschiebung der Mittel zur Erfassung der Luminanzprofile entspricht, insbesondere als Funktion der Positionsinformationen.

8. Vorrichtung nach Anspruch 6 oder 7, wobei die die Rechenmittel geeignet sind, in dem Bild die Position der Fahrbahnmarkierungen in der Richtung zu modifizieren, die einer Richtung rechtwinklig zu der Verschiebungsrichtung der Mittel zur Erfassung der Luminanzprofile entspricht, insbesondere als Funktion der Positionsinformationen, oder auch um die Markierungen in dem Bild zu zentrieren.

9. Vorrichtung nach einem der Ansprüche 1 bis 8, wobei die Rechenmittel geeignet sind, in dem Bild den Typ, die Position und/oder die Kontur der Fahrbahnmarkierungen zu extrahieren.

10. Vorrichtung nach einem der Ansprüche 1 bis 9, wobei die Mittel zur Erfassung der Luminanzprofile eine Einheit von ausgerichteten Detektoren umfassen.

11. Vorrichtung nach einem der Ansprüche 1 bis 10, wobei die Mittel (22, 24) zur Erfassung der Profile mindestens einen Lichtdetektor umfassen, und geeignet sind, die Luminanzprofile zu erfassen, welche direkt die Signale repräsentieren, die von dem mindestens einen Lichtdetektor geliefert werden.

12. Vorrichtung nach einem der Ansprüche 1 bis 11, wobei die Rechenmittel das Bild, das die Markierungen darstellt, aus einer Vielzahl von Luminanzprofilen und/oder Profilen einer rückreflektierten Luminanz bilden.

13. Verfahren zur Erstellung eines Bilds von Fahrbahnmarkierungen einer Fahrbahn aus einer Vielzahl von Profilen einer rückflektierten Luminanz, die aufeinanderfolgenden Messorten entsprechen, unter Verwendung einer Vorrichtung zur Messung von Koeffizienten einer rückreflektierten Luminanz der Fahrbahnmarkierungen, wobei das Verfahren eine Vielzahl von Erfassungen von Luminanzprofilen umfasst, die an einer Vielzahl von aufeinanderfolgenden Messorten vorgenommen werden, wobei jede Erfassung aus der Projektion eines sichtbaren Lichts auf Flächen der Fahrbahn unter einem Einfallwinkel nahe 1,24°, und der Erfassung eines Luminanzprofiles, das die beleuchteten Flächen darstellt, besteht,
wobei das Verfahren außerdem einen Schritt der Erstellung des Bilds aus Luminanzprofilen umfasst, die an aufeinanderfolgenden Messorten erfasst werden,
wobei die Luminanzprofile aus der von der Fahrbahn rückreflektierter Strahlung, beobachtet unter einem Winkel nahe 2,29°, erfasst werden,
wobei die Messvorrichtung geeignet ist, Profile der rückreflektierten Luminanz aus den erfassten Luminanzprofilen zu bestimmen,
wobei die Messvorrichtung Mittel zur Messung der Beleuchtung umfasst, die auf die beleuchteten Flächen ausgeübt wird, und
wobei die Werte der rückreflektierten Luminanz der Profile der rückreflektierten Luminanz jeweils gleich dem Verhältnis der Luminanz einer von dem Projektor beleuchteten Fläche zu der Beleuchtung, der die Fläche durch den Projektor ausgesetzt wird, sind.

## Claims

1. An imaging device (10) for producing an image of road markings (1, 3, CD) of a roadway (14) from a plurality of back-reflected luminance profiles corresponding to successive measurement locations, the device comprising a visible light projector (23), able to light the roadway along an illumination direction, from an incidence angle close to 1.24°, to allow the measurement of the luminance of the roadway;
means for measuring the illumination thus applied to the roadway by the projector;
means (22; 24) for acquiring luminance profiles (P1...P20), able to acquire luminance profiles at measuring locations successively illuminated by the projector, the illumination profiles being acquired from the rays back-reflected by the roadway observed from an angle close to 2.29°; and
calculating means (40) able to determine back-reflected luminance profiles from the acquired luminance profiles, the back-reflected luminance values of said back-reflected luminance profiles each being equal to the ratio of the luminance of a surface illuminated by the projector to the illumination to which said surface is subjected;
the calculating means (40) further being able to produce an image representing said markings from a plurality of luminance profiles acquired by said acquisition means.

2. The device according to claim 1, wherein said acquired luminance profiles comprise a limited number of values that is less than 200, and preferably less than 150.

3. The device according to claim 1 or 2, wherein the acquisition means are able to perform acquisitions point by point or line by line, but not in a matrix manner.

4. The device according to any one of claims 1 to 3, wherein the acquisition means are able to calculate a back-reflected luminance profile based on differences between an acquired luminance profile when the projector is turned off and a luminance profile acquired when the projector is turned on.

5. The device according to any one of claims 1 to 4, wherein the calculating means produce said image by assigning the profiles of said plurality of profiles to the successive lines of an image.

6. The device according to any one of claims 1 to 5, further including means (26) for acquiring position information of said luminance profiles, and the calculating means (40) are able to exploit said position information to produce said at least one image.

7. The device according to claim 6, wherein the calculating means are able to modify, in said image, the position of road markings in the direction corresponding to the movement direction of the luminance profile acquisition means, in particular based on said position information.

8. The device according to claim 6 or 7, wherein the calculating means are able to modify, in said image, the position of road markings in the direction corresponding to a direction perpendicular to the movement direction of the luminance profile acquisition means, in particular based on said position information, or so as to center the markings in the image.

9. The device according to any one of claims 1 to 8, wherein the calculating means are able to extract, in said image, the type, position and/or contour of road markings.

10. The device according to any one of claims 1 to 9, wherein the luminance profile acquisition means comprise a set of aligned detectors.

11. The device according to any one of claims 1 to 10, wherein the profile acquisition means (22, 24) comprise at least one light detector, and are able to acquire luminance profiles directly representing the signals provided by said at least one light detector.

12. The device according to any one of claims 1 to 11, wherein the calculating means make up the image representing the markings from a plurality of luminance profiles and/or back-reflected luminance profiles.

13. A method for producing an image of road markings of a roadway from a plurality of back-reflected luminance profiles corresponding to successive measuring locations, using a device for measuring the back-reflected luminance coefficient of road markings,
the method comprising a plurality of acquisitions of luminance profiles, done in a plurality of successive measuring locations, each acquisition consisting of projecting a visible light on surfaces of the roadway from an incidence angle close to 1.24°, and acquiring a luminance profile representative of the illuminated surfaces;
the method further comprising a step of forming said image from luminance profiles acquired in the successive measuring locations;
the luminance profiles being acquired from the rays back-reflected by the roadway observed from an angle close to 2.29°;
the measuring device being able to determine back-reflected luminance profiles from acquired luminance profiles;
the measuring device comprising means for measuring the illumination applied to said illuminated surfaces; and
the back-reflected illumination values of the back-reflected illumination profiles each being equal to the ratio of the illumination of a surface illuminated by the projector to the illumination to which said surface is subjected by the projector.
